# EUROPEAN PATENT SPECIFICATION

(11) **EP 1 250 747 B1**
(45) Date of publication and mention of the grant of the patent: **22.02.2006**
(21) Application number: 00947705.0
(22) Date of filing: 04.08.2000
(51) Int. Cl.: H02K 3/38

(54) **AN INSULATING COVER AND AN ELECTRIC MACHINE**
ISOLIERENDE ABDECKUNG UND ELEKTRISCHE MASCHINE
COUVERCLE ISOLANT ET MACHINE ELECTRIQUE

(30) Priority: 27.01.2000 BR 5500189 U
(43) Date of publication of application: 23.10.2002
(73) Proprietor: Siemens Ltda, CEP-05110-901 Sao Paulo, SP (BR)
(72) Inventor: LOCATTO MAZOLLA, Ernesto, CEP-06345-100 Carapicuiba, SP (BR); HILDINGER, Thomas, CEP-04710-140 S o Paulo, SP (BR)
(74) Representative: Legg, Cyrus James Grahame
(86) International application number: PCT/BR2000/000087
(87) International publication number: WO 2001/056135

(56) References cited:
- DE-A- 4 237 079

## Description

The present invention relates to an electric insulating cover, particularly applicable to statoric bars of large-size electric machines such as hydrogenerators. An electric machine is also foreseen, provided with the insulating cover, object of the present invention.

The large-size electric machines are basically constituted of a rotor and a stator, wherein such elements have windings which are mostly formed by bars welded to each other, in order to substitute the windings of small-size electric machines that utilize wires to construct said elements.

In particular, the statoric bars are connected to each other, forming the imbricated or undulated windings, depending exclusively on the project utilized for their manufacture. Said junctions are made by welding to guarantee the circuit conductivity, being posteriorly isolated due to the fact that their outer portions are exposed at machine ends.

### Description of the related art

Nowadays, the insulation of such outer portions is made by placing insulating covers, which are fixed with resins to the bar terminals. Said covers are substantially in a flat-parallelepiped-shaped, having one of its smaller faces opened to engage at the outer portions of the statoric bars, so that they can be posteriorly filled with resin in order to fix the cover to the bars.

An insulating cover according to the prior art is disclosed in DE-A-4237079

However, the use of said covers presents a number of drawbacks, which raises the time and the costs of manufacture and maintenance of electric machines known at present.

Among the drawbacks of the actual insulating covers, it can be detached the low heat transmission, which is a significant problem because a more heated region arises, due to the circulation of the current during normal functioning of the machines and to the fact that the solder is located at the winding bar terminals, becoming the heat transmission difficult with the use of the present-day covers, since there is no direct ventilation on the contact region.

As a result of the use of resin in covers filling, the location becomes quite dirty, requiring a careful cleaning after completion of the work, which results in a quite long installation time. In addition, the mounting of the covers on the upper portion of the motor becomes difficult, because in this situation, the resin which is still liquid inside the insulating cover, flows along the winding bars right after the latter have been mounted.

In view of the use of resin, there is the obligation of the use of an additional Individual Protection Equipment (IPE).

Furthermore, due to the use of the actual covers, there is no possibility of making a direct inspection on the winding bar terminals along the working life of the machines, because these terminals are enveloped by resin.

### Objective and brief description of the invention

The objective of the present invention is to provide an insulating cover that dispenses the use of resin for its fixation, having a high heat transmission by direct ventilation of the end portions of the winding, being easy to be mounted, maintenance and replacement dispensing the use of protection equipment, and further enabling the checking of the conservation state of the winding end portions during the electric machine working life.

This objective is achieved by means of an insulating cover, particularly an insulating cover of statoric bars of electric machines, the cover comprising first and second faces, positioned substantially parallel to each other and being joined by at least one joining element located in a substantially central portion of the faces, and the element being provided with at least one fixing means to fix the insulating cover to an outer portion of the electric machine winding.

Another objective of the present invention is to provide an electric machine provided with an insulation cover that dispenses the use of resin for its fixation, enabling an easy mounting, the maintenance and replacement dispensing the use of protection equipment and further enabling the checking of the conservation state of the end portions of the winding during the electric machine working life.

This objective is achieved by means of an electric machine having an insulation cover on the outer portion of the statoric bars, the insulating cover having first and second faces positioned substantially parallel to each other and being joined by at least one joining element located in a substantially central portion of the faces, said element being provided with at least one fixing means to fix the insulator to said end portion.

### Brief description of the drawings

The present invention will now be described in greater detail with reference to an embodiment represented in the drawings.
- Figure 1 shows a top view of the insulating cover of the present invention;
- Figure 2 shows a side view of the insulating cover of figure 1;
- Figure 3 shows a perspective side view of the insulating cover of figures 1 and 2; and
- Figure 4 is a side view of the insulating cover illustrated in the above figures, showing, in partial cross-section, the mounting thereof on an end portion of an electric machine winding.

### Detailed description of the figures

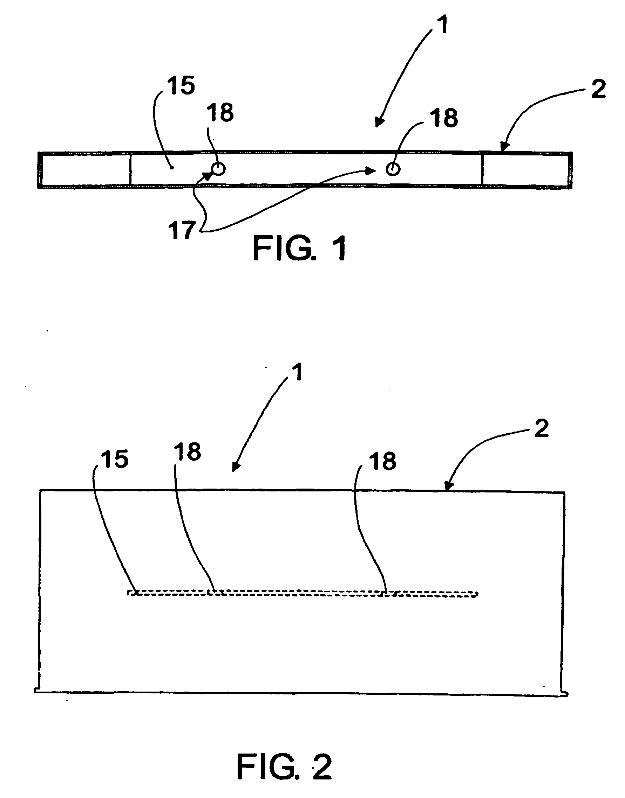

As can be seen from figures 1, 2, 3, or 4, the insulating cover 1, object of the present invention, is formed by a body 2 that will be engaged on an end portion 29 of an electric machine winding (not shown).

The body 2 comprises a first face 10 and a second face 20, both substantially rectangular and planar in shape, positioned parallel to each other and being joined in a substantially central portion by means of a joining element 15, which is defined in an orthogonal plane with respect to the planes of the faces 10 and 20, which are also rectangular and planar in shape.

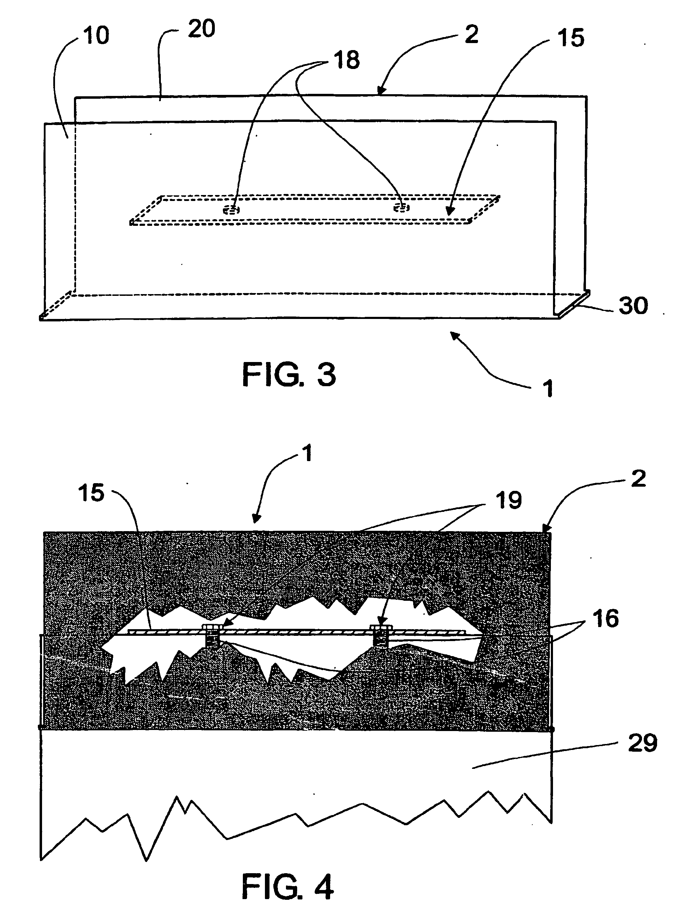

As can be seen from figure 3, in order to enable the faces 10 and 20 to have good mechanical stability and not bend around the element 15, at least one of their end portions is joined by a guide edge 30. Preferably, a pair of guide edges 30 is used at opposed end parts of the body 2.

The joining element 15 is provided with at least one fixing means 17 to fix the insulating cover 1 to the end portion 29 of the electric machine winding. The fixing means 17 should preferably be a bore 18, and more preferably a pair of bores, so that the insulating cover 1 can be fixed to the end portion 29 by means of a screw 19. Evidently the fixation of the joining element 15 may vary, and other fixing means 17 may be used, different from a screw 19. The joining element 15 may also be made in different ways, such as, for instance, two rectangular stretches positioned side by side, offering the same possibility of fixing the insulating cover 1 to the end portion 29. A single screw 19 can also be used at a central portion of the joining element 15. The fixation of the insulating cover 1 may also be carried out by engaging the end portion 29, in which case it is necessary to foresee the exact dimensions in order to guarantee an adequate fixation.

As can be seen from figure 4, the end portion 29 of the electric machine winding will be introduced into the region defined between the faces 10 and 20, the joining .element 15 and the guide edges 30. Then the insulating cover 1 will be fixed by means of the screws 19, which pass through the bores 18. In this embodiment, there should be provided threaded bores 16 in the end portion 29 for threading the screws 19.

The dimensions of the insulating cover 1 should be adequate for the engagement with the end portion 29 and to fit without clearance. The insulating cover 1 is preferably manufactured from a single piece, preferably molded from glass fiber. This fiber may be replaced for another material that meets the same requirements of mechanical and electric insulation characteristics of the preferred material, and having a high dielectric rigidity with high electric resistance in transverse and longitudinal direction, and further withstanding at least temperatures of 155° C, so as to meet at least class F.

The present invention provides, as one of the main advantages in comparison with the insulating covers known from the prior art, a better heat transmission between the end portions 29 and the environment, generating lesser losses in the machine and better effectiveness, reduction in the utilization of resin during the mounting of the large-size electric machines, decreasing the dirt in the work place and eliminating the use of individual protection equipment (IPE) during the mounting of the insulating covers 1, reduction of the installation time of the insulating covers 1 and, in addition, permiting a direct inspection of the end portions 29 of the machines, which, enables one, during the standstills for maintenance, to check the condition of the solders and of the terminals after periods of functioning, besides significantly reducing the costs of installation and maintenance of the insulating cover 1, as well as of the electric machine provided with this insulating cover 1.

A preferred embodiment having been described, it should be understood that the scope of the present invention embraces other possible variants, being limited only by the contents of the accompanying claims.

## Claims

1. An insulating cover (1) for statoric bars of electric machines, **characterized in that** it comprises a first face (10) and a second face (20), positioned substantially parallel to each other and joined by at least one joining element (15) located in a substantially central portion of the faces (10) and (20), the element (15) being provided with at least one fixing means (17) to fix the insulating cover (1) to an end portion (29) of the electric machine winding.

2. A cover according to claim 1, **characterized in that** the joining element (15) is positioned orthogonally with respect to the plane of the faces (10) and (20).

3. A cover according to claim 1 or 2, **characterized in that** the end portion (29) of the winding is introduced into the region defined between the faces (10) and (20) and the joining element (15).

4. A cover according to claim 1, 2, or 3, **characterized in that** the fixing means (17) is a bore (18) provided in the joining element (15), and that its fixation to the end portion (29) of the electric machine winding is carried out by at least one fixing element (19) that passes through the bore (18).

5. A cover according to claim 4, **characterized in that** the fixing means is a screw (19).

6. A cover according to claim 1, 2, 3, 4, or 5,**characterized in that** the faces (10) and (20) and the joining element (15) are substantially planar.

7. A cover according to claim 6, **characterized in that** the faces (10) and (20) and the joining element (15) are substantially rectangular.

8. A cover according to claim 1, 2, 3, 4, 5, 6, or 7, **characterized in that** at least one end portion of each of the faces (10) and (20) is joined by a guide edge (30).

9. A cover according to claim 8, **characterized in that** the guide edge (30) engages the end portion (29) of the electric machine winding.

10. A cover according to claim 1, 2, 3, 4, 5, 6, 7, 8, or 9, **characterized in that** it is manufactured from molded glass fiber.

11. An electric machine comprising statoric bars, **characterized in that** the end portion (29) of the statoric bars is provided with an insulating cover (1) according to claim 1.

12. A machine according to claim 11, **characterized in that** the end portion (29) of the winding is enveloped by the insulating cover (1).

13. A machine according to claim 12, **characterized in that** the end portion (29) is introduced in the region defined between the faces (10) and (20) and the joining element (15) of the insulating cover (1).

## Patentansprüche

1. Isolierende Abdeckung (1) für Ständerstäbe elektrischer Maschinen, **dadurch gekennzeichnet, dass** sie eine erste Fläche (10) und eine zweite Fläche (20) umfasst, die im Wesentlichen parallel zueinander angeordnet und durch wenigstens ein Verbindungselement (15) verbunden sind, das sich in einem im Wesentlichen mittigen Abschnitt der Flächen (10) und (20) befindet, wobei das Element (15) mit wenigstens einer Befestigungseinrichtung (17) zum Befestigen der isolierenden Abdeckung (1) an einem Endabschnitt (29) der Wicklung der elektrischen Maschine versehen ist.

2. Abdeckung nach Anspruch 1, **dadurch gekennzeichnet, dass** das Verbindungselement (15) senkrecht in Bezug auf die Ebene der Flächen (10) und (20) angeordnet ist.

3. Abdeckung nach Anspruch 1 oder 2, **dadurch gekennzeichnet, dass** der Endabschnitt (29) der Wicklung in den Bereich eingeführt ist, der zwischen den Flächen (10) sowie (20) und dem Verbindungselement (15) ausgebildet ist.

4. Abdeckung nach Anspruch 1, 2 oder 3, **dadurch gekennzeichnet, dass** die Befestigungseinrichtung (17) eine Bohrung (18) ist, die In dem Verbindungselement (15) vorhanden ist, und dass ihre Befestigung an dem Endabschnitt (29) der Wicklung der elektrischen Maschine durch wenigstens ein Befestigungselement (19) ausgeführt wird, das durch die Bohrung (18) hindurchtritt.

5. Abdeckung nach Anspruch 4, **dadurch gekennzeichnet, dass** die Befestigungseinrichtung eine Schraube (19) ist.

6. Abdeckung nach Anspruch 1, 2, 3, 4 oder 5, **dadurch gekennzeichnet, dass** die Flächen (10) sowie (20) und das Verbindungselement (15) im Wesentlichen plan sind.

7. Abdeckung nach Anspruch 6, **dadurch gekennzeichnet, dass** die Flächen (10) sowie (20) und das Verbindungselement (15) im Wesentlichen rechteckig sind.

8. Abdeckung nach Anspruch 1, 2, 3, 4. 5, 6 oder 7, **dadurch gekennzeichnet, dass** wenigstens ein Endabschnitt jeder der Flächen (10) und (20) durch eine Führungskante (30) verbunden ist.

9. Abdeckung nach Anspruch 8, **dadurch gekennzeichnet, dass** die Führungskante (30) mit dem Endabschnitt (29) der Wicklung der elektrischen Maschine in Eingriff ist.

10. Abdeckung nach Anspruch 1, 2, 3, 4, 5, 6, 7, 8 oder 9, **dadurch gekennzeichnet, dass** sie aus geformter Glasfaser hergestellt ist.

11. Elektrische Maschine, die Ständerstäbe umfasst, **dadurch gekennzeichnet, dass** der Endabschnitt (29) der Ständerstäbe mit einer isolierenden Abdeckung (1) nach Anspruch 1 versehen ist.

12. Maschine nach Anspruch 11, **dadurch gekennzeichnet, dass** der Endabschnitt (29) der Wicklung von der isolierenden Abdeckung (1) umhüllt wird.

13. Maschine nach Anspruch 12, **dadurch gekennzeichnet, dass** der Endabschnitt (29) in den Bereich eingeführt ist, der zwischen den Flächen (10) sowie (20) und dem Verbindungselement (15) der isolierenden Abdeckung (1) ausgebildet ist.

## Revendications

1. Couvercle isolant (1) pour barres de stator de machines électriques, **caractérisé en ce qu'**il comprend une première face (10) et une seconde face (20), positionnées sensiblement de façon parallèle entre elles et reliées par un élément de liaison (15) situé dans une position sensiblement centrale des faces (10) et (20), l'élément (15) étant muni d'au moins un moyen de fixation (17) pour fixer le couvercle isolant (1) sur une portion d'extrémité (29) de l'enroulement de la machine électrique.

2. Couvercle selon la revendication 1, **caractérisé en ce que** l'élément de liaison (15) est positionné de façon orthogonale par rapport au plan des faces (10) et (20).

3. Couvercle selon la revendication 1 ou 2, **caractérisé en ce que** la portion d'extrémité (29) de l'enroulement est introduite dans la région définie entre les faces (10) et (20) et l'élément de liaison (15).

4. Couvercle selon la revendication 1, 2 ou 3, **caractérisé en ce que** le moyen de fixation (17) est un alésage (18) disposé dans l'élément de liaison (15), et **en ce que** sa fixation sur la portion d'extrémité (29) de l'enroulement de la machine électrique est effectuée par au moins un élément de fixation (19) qui traverse l'alésage (18) .

5. Couvercle selon la revendication 4, **caractérisé en ce que** le moyen de fixation est une vis (19).

6. Couvercle selon la revendication 1, 2, 3, 4 ou 5, **caractérisé en ce que** les faces (10) et (20) et l'élément de liaison (15) sont sensiblement planaires.

7. Couvercle selon la revendication 6, **caractérisé en ce que** les faces (10) et (20) et l'élément de liaison (15) sont sensiblement rectangulaires.

8. Couvercle selon la revendication 1, 2, 3, 4, 5, 6 ou 7, **caractérisé en ce qu'**au moins une portion d'extrémité de chacune des faces (10) et (20) est reliée par un bord de guidage (30).

9. Couvercle selon la revendication 8, **caractérisé en ce que** le bord de guidage (30) coopère avec la portion d'extrémité (29) de l'enroulement de 1a machine électrique.

10. Couvercle selon la revendication 1, 2, 3, 4, 5, 6, 7, 8 ou 9, **caractérisé en ce qu'**il est fabriqué à partir de fibre de verre moulée.

11. Machine électrique comprenant des barres de stator, **caractérisée en ce que** la portion d'extrémité (29) des barres de stator est munie d'un couvercle isolant (1) selon la revendication 1.

12. Machine selon la revendication 11, **caractérisée en ce que** la portion d'extrémité (29) de l'enroulement est enveloppée par le couvercle isolant (13).

13. Machine selon la revendication 12, **caractérisée en ce que** la portion d'extrémité (29) est introduite dans la région définie entre les faces (10) et (20) et l'élément de liaison (15) du couvercle isolant (1).
